# EUROPÄISCHE PATENTSCHRIFT

(11) **EP 2 477 290 B1**
(45) Veröffentlichungstag und Bekanntmachung des Hinweises auf die Patenterteilung: **23.03.2016**
(21) Anmeldenummer: 11009517.1
(22) Anmeldetag: 02.12.2011
(51) Int. Cl.: H02G 3/08, H01R 13/73, H02G 3/12, H02G 3/18

(54) **Elektrisches/elektronisches Unterputz-Installationsgerät der Haus- und Gebäudesystemtechnik oder der Hauskommunikationstechnik**
Electrical/electronic built-in installation device for house and building technology or house communication technology
Appareil électrique/électronique d'installation encastré issu de la domotique ou de la technique de communication domestique

(30) Priorität: 13.01.2011 DE 102011008506
(43) Veröffentlichungstag der Anmeldung: 18.07.2012
(73) Patentinhaber: ABB AG, 68309 Mannheim (DE)
(72) Erfinder: Lerke, Richard, 58135 Hagen (DE); Kohaupt, Stephan, 58093 Hagen (DE); Schrage, Ortwin, 47906 Kempen (DE); Lange, Manfred, 44229 Dortmund (DE); Ewers, Manfred, 58239 Schwerte (DE)

(56) Entgegenhaltungen:
- EP-A1- 2 093 852
- EP-A2- 1 962 261
- DE-A1- 4 225 326
- DE-A1- 19 812 504
- DE-A1-102005 016 082
- DE-A1-102007 063 584
- DE-B3-102006 017 915

## Beschreibung

Die Erfindung betrifft ein elektrisches/elektronisches Unterputz-Installationsgerät der Haus- und Gebäudesystemtechnik oder der Hauskommunikationstechnik, insbesondere für den Kleinspannungs-Bereich.

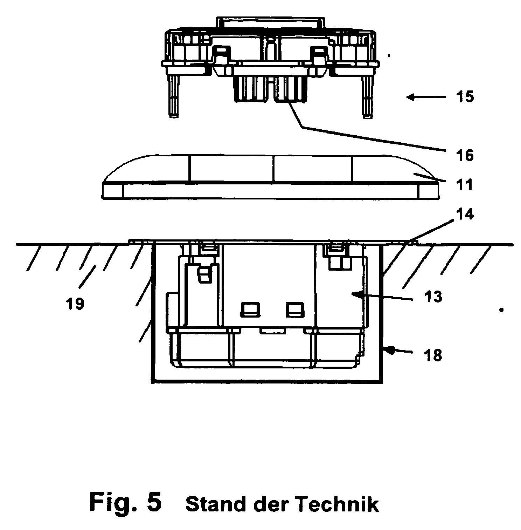

Wie in Fig. 5 dargestellt, weisen übliche elektrische/elektronische Unterputz-Installationsgeräte im Bereich EIB/KONNEX (Europäischer Installationsbus / Standard für Haus- und Gebäudesystemtechnik der Konnex-Assoziation) und auch im Bereich der Hauskommunikationstechnik (Door Entry System, Türzugangssysteme) des Standes der Technik in der Regel einen Unterputzeinsatz respektive ein einen Tragring 14 aufweisendes Hauptmodul 13 auf, der respektive das in einer handelsüblichen, standardisierten, in einer Wand 19 installierten UP-Gerätedose 18 befestigt wird. Auf das Hauptmodul 13 wird dann ein Funktionsmodul 15 aufgesteckt, wobei das Funktionsmodul 15 beispielsweise in Form eines Tasterelements, Anzeigeelements, Kameramoduls usw. ausgebildet ist. Die elektrische Verbindung zwischen Hauptmodul 13 und Funktionsmodul 15 erfolgt durch eine Kontaktierungsvorrichtung 16, vorzugsweise ein Stift/Buchsen-Stecksystem. Das elektrische/elektronische Unterputz-Installationsgerät wird üblicherweise komplettiert durch einen Abdeckrahmen 11.

Aus der EP 1 962 261 A2 ist ein Unterputz-Installationsgerät mit einem Gerätesockel bekannt, welcher über Anschlussklemmen an ein Netz anschließbar ist.

Aus der DE 42 25 326 A1 ist eine Anschlussvorrichtung mit einem zugehörigen Bus-Adapter bekannt, welcher eine Bus-Ankopplung aufweist, die an gebäudeseitige BusZuleitungen anschlleßbar ist, wobei die Bus-Ankopplung mittels eines Tragringes an der Installationsdose befestigt wird. Der Tragring ist mit einer raumseitig offenen Aufnahme versehen, deren Innenabmessungen zumindest so groß sind, dass die Bus-Ankopplung in sie einsetzbar ist. Im Boden der Aufnahme befindet sich die Bus-Anschlussklemme. Die Bus-Anschlussklemme sowie die zugehörigen Stecker der Bus-Ankopplung sind so positioniert, dass mit dem Einstecken oder Herausziehen der Bus-Ankopplung In die oder aus der Aufnahme zugleich die elektrische Verbindung mit der Bus-Anschlussklemme hegestellt oder getrennt wird.

Aus der EP 1 320 244 B2 ist eine modulare Hauskommunikationsanlage bekannt, bei welcher die Türstation und/oder die Wohnungsstation aus einem Hauptmodul sowie einem zugeordneten und elektrische Funktionselemente aufweisendem Funktionsmodul (z. B. Bedienelement) aufgebaut ist. Das Hauptmodul besteht nach Art eines Elektro-Installatlonsgarätes eines üblichen Gebäudeinstallationssystems aus einem sockelartigen, in eine normgemäße Elektro-Installationsdose einsetzbaren Geräte-Einsatz. Das Funktionsmodul ist elektrisch und mechanisch mit dem zugehörigen Hauptmodul verbindbar, indem es als Aufsatz unmittelbar auf den Geräte-Einsatz aufsteckbar ist.

Bei der Montage derartiger elektrischer/elektronischer Unterputr-Installatiansgeräte in der UP-Gerätedose besteht die Gefahr, dass die in der Regel dünnen/fitigranen externen Leitungen eingequetscht oder beschädigt werden. Bei der Demontage des Funktionsmoduls, z. B. bei Renovierungsarbeiten, verbleibt das Hauptmodul in der UP-Gerätedose in der Wand. Die zur Kontaktierung des Funktionsmoduls erforderliche Buchse ist dann in der Regel wandbündig und somit anfällig gegen Verschmutzung durch Farbe oder durch Leim beim Übertapezieren. Ein anschließendes Reinigen der meist filigranen Buchse ist schwer möglich und zeitaufwendig.

Darüber hinaus sind elektrische/elektronische Unterputz-Installationsgeräte allgemein bekannt, bei denen das Hauptrnodul mit dem Funktionsmodul eine zur Montage in einer UP-Gerätedose geeignete Baueinheit, nachfolgend UP-Einsatz genannt, bildet.

Bei der Montage derartiger elektrischer/elektronischer Unterputz-Installationsgeräte in der UP-Gerätedose besteht die Gefahr, dass die in der Regel dünnen/filigranen externen Leitungen eingequetscht oder beschädigt werden. Bei der Demontage eines solchen UP-Einsatzes müssen die externen Leitungen (z. B. die Busleitungen) vom UP-Einsatz getrennt werden und verbleiben in der UP-Gerätedose. Derartige auch als Monoblockgeräte bezeichnete elektrische/elektronische Unterputz-Installationsgeräte sind zumindest auf dem VDE-Markt nicht erwünscht / nicht zulässig.

Der Erfindung liegt die Aufgabe zugrunde, ein optimiertes elektrisches/elektronisches Unterputz-Installationsgerät der Haus- und Gebäudesystemtechnik oder der Hauskommunikationstechnik anzugeben.

Diese Aufgabe wird erfindungsgemäß gelöst durch ein elektrisches/elektronisches Unterputz-Installationsgerät der Haus- und Gebäudesystemtechnik oder der Hauskommunikationstechnik, umfassend einen Elektronikeinsatz und einen separaten, zur Montage in eine handelsübliche und/oder standardisierte UP-Gerätedose geeigneten UP-Topf, wobei der UP-Topf ein Gehäuse mit Tragring aufweist, wobei im Bodenbereich des Gehäuses Anschlussklemmen zum Anschluss externer Leitungen befestigt sind und wobei im Bodenbereich des Gehäuses eine elektrische Kontaktierungsvorrichtung befestigt ist, welche im montierten Zustand mit einer elektrischen Kontaktierungsvorrichtung des Elektronikeinsatzes zusammenarbeitet.

Die mit der Erfindung erzielbaren Vorteile liegen insbesondere darin, dass sich die Kontaktierungsvorrichtung des UP-Topfes im Bodenbereich befindet, so dass nach Demontage des Elektronikeinsatzes vom UP-Topf ein Übertapezieren oder Überstreichen des in der UP-Gerätedose montierten UP-Topfes beim Renovieren möglich ist, ohne dass sich dabei das Risiko einer Verunreinigung der elektrischen Kontaktierungsvorrichtung ergibt. Des Weiteren besteht bei der Montage nicht die Gefahr, dass externe Leitungen eingequetscht oder beschädigt oder gelöst werden.

Zweckmäßige Weiterbildungen der Erfindung sind in den Unteransprüchen gekennzeichnet.

Die Erfindung wird nachstehend an Hand der in der Zeichnung dargestellten Ausführungsbeispiele erläutert. Es zeigen:
- Fig. 1: ein elektrisches/elektronisches Unterputz-Installationsgerät der Haus- und Gebäudesystemtechnik oder der Hauskommunikationstechnik mit seinen drei Hauptkomponenten,
- Fig. 2: ein zusammengesetztes elektrisches/elektronisches Unterputz-Installationsgerät der Haus- und Gebäudesystemtechnik oder der Hauskommunikationstechnik,
- Fig. 3: eine Rückansicht eines UP-Topfes,
- Fig. 4: eine Frontansicht eines UP-Topfes,
- Fig. 5: ein elektrisches/elektronisches Unterputz-Installationsgerät der Haus- und Gebäudesystemtechnik oder der Hauskommunikationstechnik mit seinen drei Hauptkomponenten gemäß dem bekannten Stand der Technik.

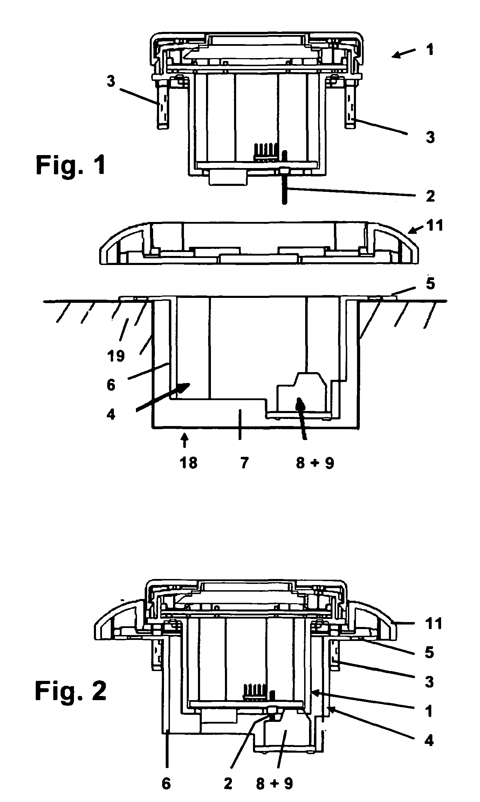

In Fig. 1 ist ein elektrisches/elektronisches Unterputz-Installationsgerät der Haus- und Gebäudesystemtechnik oder der Hauskommunikationstechnik mit seinen drei Hauptkomponenten dargestellt. Diese drei Hauptkomponenten sind
- ein Elektronikeinsatz 1, welcher sowohl Komponenten eines Hauptmoduls als auch Komponenten eines Funktionsmoduls umfasst,
- ein UP-Topf 4, welcher ein Gehäuse 6 mit Tragring 5 sowie Anschlussklemmen 8 für den Anschluss von externen Leitungen, z. B. Busleitungen, aufweist,
- optional ein Abdeckrahmen 11.

Dabei bilden die Anschlussklemmen 8 des UP-Topfes 4 vorzugsweise gleichzeitig eine elektrische Kontaktierungsvorrichtung 9 für die Kontaktierung einer hierzu korrespondierend ausgebildeten elektrischen Kontaktierungsvorrichtung 2 des Elektronikeinsatzes 1. Der Tragring 5 dient zur Montage des UP-Topfes 4 in einer UP-Gerätedose 18, welche in einer Wand 19 installiert ist. Gehäuse und Tragring können auch einteilig ausgebildet sein. Für die Einführung der externen Leitungen in den Innenraum des Gehäuses 6 ist Letzteres mit mindestens einer bodenseitigen Öffnung 7 versehen, deren Größe das Richten von Leitungen zulässt. Der Elektronikeinsatzes 1 weist Haltevorrichtungen 3 auf, um auf diese Weise eine mechanische Befestigung am UP-Topf 4 bewirken zu können.

In Fig. 2 ist ein zusammengesetztes elektrisches/elektronisches Unterputz-Installationsgerät der Haus- und Gebäudesystemtechnik oder der Hauskommunikationstechnik dargestellt. Es ist die elektrische Kontaktierung zwischen der Kontaktierungsvorrichtung 2 des Elektronikeinsatzes 1 und der Kontaktierungsvorrichtung 9 des UP-Topfes 4 zu erkennen, wobei die Kontaktierungsvorrichtung 9 in die Anschlussklemmen 8 integriert ist. Des Weiteren ist das für die mechanische Befestigung notwendige Eingreifen der Haltevorrichtungen 3 in den Tragring 5 gezeigt. Ferner sind das Gehäuse 6 des UP-Topfes 4 sowie der Abdeckrahmen 11 zu erkennen.

Die Auswahl des Abdeckrahmens 11 kann nach Wunsch aus unterschiedlichen Installationsgeräte-Programmen mit unterschiedlichem Design und unterschiedlicher Farbgebung erfolgen. Derartige Unterputz-Programme sind in unterschiedlicher Formgebung, unterschiedlicher Farbgebung und unter Einsatz unterschiedlicher Materialien (z. B. Kunststoff, Edelstahl) verfügbar. Auf diese Weise wird das vorgeschlagene elektrische/elektronische Unterputz-Installationsgerät harmonisch in ein Unterputz-Programm integriert und stellt keinen "Fremdkörper" im Hinblick auf Steckdosen, Schalter, Dimmer, Tastsensoren, EIB/KONNEX-Geräte, Geräte der Hauskommunikation, Bewegungsmelder usw. dar. Des Weiteren kann das vorgeschlagene elektrische/elektronische Unterputz-Installationsgerät in Mehrfach-Kombinationen (z. B. 2fach-Kombination, 3fach-Kombination, 4fach-Kombination) zusammen mit Schaltern, Dimmern usw. eingesetzt werden. Ferner ergibt sich eine Vielzahl unterschiedlicher Kombinationsmöglichkeiten, z. B. im Hinblick auf mögliche Farb-Kombinationen.

Selbstverständlich ist es zur Realisierung einer Einzelgeräte-Lösung und unter Verzicht der vorstehend angeführten Vorteile auch möglich, den Elektronikeinsatz 1 selbst mit einem (festen) Abdeckrahmen 11 auszurüsten.

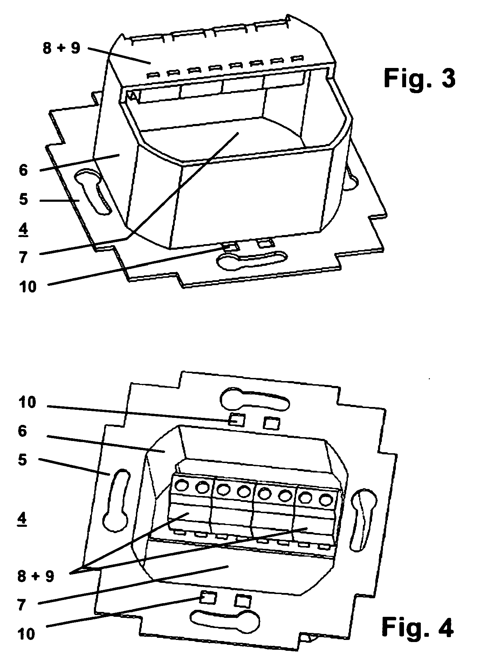

In Fig. 3 ist eine Rückansicht-eines UP-Topfes und in Fig. 4 ist eine Frontansicht eines UP-Topfes dargestellt. Es sind das Gehäuse 6 des UP-Topfes 4 mit bodenseitiger Öffnung 7, der mit dem Gehäuse 6 fest verbundene Tragring 5 und die Anschlussklemmen + Kontaktierungsvorrichtung 8 + 9 zu erkennen. Insbesondere sind mehrere Ausnehmungen 10 im Tragring 5 eingebracht, durch welche die Haltevorrichtungen 3 des Elektronikeinsatzes 1 greifen, um derart die mechanische Befestigung des Elektronikeinsatz 1 am UP-Topf 4 zu bewirken.

Die Installation des elektrischen/elektronischen Unterputz-Installationsgerätes der Haus- und Gebäudesystemtechnik oder der Hauskommunikationstechnik erfolgt wie folgt: Zunächst erfolgt bei einer Vormontage eine Befestigung der externen Leitungen an den Anschlussklemmen 8 des UP-Topfes 4. Danach wird der UP-Topf 4 in die UP-Gerätedose 18 eingeführt und an der UP-Gerätedose 18 befestigt, z. B. durch Spreizen oder durch Schrauben, welche durch Ausnehmungen im Tragring 5 in Bohrungen der UP-Gerätedose 18 greifen. Durch die bodenseitige Öffnung 7 des UP-Topfes 4 können die externen Leitungen dann in einfacher Weise mittels eines geeigneten Werkzeuges, z. B. einer Spitzzange, unter dem Boden des UP-Topfes 4 sortiert / geordnet / geschoben werden. Der für den Elektronikeinsatz 1 benötigte Bauraum ist somit frei von Leitungen und eine Beschädigung der externen Leitungen während der Montage wird wirksam verhindert. Anschließend erfolgt das Einführen des Elektronikeinsatzes 1 in den UP-Topf 4, wodurch selbsttätig eine mechanische Befestigung durch Eingriff der Haltevorrichtungen 3 des Elektronikeinsatzes 1 in die Ausnehmungen 10 des Tragrings bzw. des UP-Topfes 4 sowie eine elektrische Kontaktierung der Kontaktierungsvorrichtungen 2 + 9 erfolgt.

Die für die elektrische Kontaktierung wichtigen Kontaktierungsvorrichtungen 2 / 9 können dabei wie folgt ausgebildet sein:
- Die Kontaktierungsvorrichtung 2 umfasst Stiftleisten, welche in Buchsen (= Kontaktierungsvorrichtung 9) der Anschlussklemmen 8 eingreifen.
- Die Kontaktierungsvorrichtung 2 umfasst metallische Druckfedern, welche unmittelbar die Schraubenköpfe oder zusätzliche Kontakte der Anschlussklemmen 8 oder auch zusätzliche, auf einer Leiterplatte des UP-Topfes 4 ausgebildete Kontakte kontaktieren (= Kontaktierungsvorrichtung 9).
- Die Kontaktierungsvorrichtung 2 umfasst Federkontaktstifte ("Pogo-Pins"), welche unmittelbar die Schraubenköpfe oder zusätzliche Kontakte der Anschlussklemmen 8 oder auch zusätzliche, auf einer Leiterplatte des UP-Topfes 4 ausgebildete Kontakte kontaktieren (= Kontaktierungsvorrichtung 9).
- Die Kontaktierungsvorrichtungen 2 + 9 sind als Stift-Buchsenleistenverbindung ausgebildet.
- Die Kontaktierungsvorrichtungen 2 + 9 sind in Direktstecktechnik einer Leiterplatte oder Flex-Leiterplatte ausgebildet.

Der Elektronikeinsatz 1 kann unterschiedlich ausgebildet sein, je nachdem, welches Applikationsfeld betroffen ist. Der Elektronikeinsatz 1 kann beispielsweise ausgebildet sein
- als Audiogerät, wie z. B. UP-Radio, MP3-Player, Ipod Docking Station,
- als Videogerät, wie z. B. Kameramodul der Hauskommunikationstechnik oder Display,
- als Lichtmodul, insbesondere LED-Modul,
- als Jalousiesteuerung,
- als Timer-Bediengerät (Kurzzeitmesser),
- als Raumtemperaturregler für die Haus- und Gebäudesystemtechnik,
- als Tastsensor oder Bedienelement, z. B. zur Ansteuerung von Schaltaktoren für Beleuchtung,
- als Bewegungsmelder für die Haus- und Gebäudesystemtechnik,
- als Dimmer-Bediengerät,
- als Anzeigegerät für die Haus- und Gebäudesystemtechnik, z. B. für das Energiemanagement,
- als Funk- oder IR-Empfangsgerät für die Haus- und Gebäudesystemtechnik,
- als sicherheitstechnischer Sensor, wie z. B. Rauchmelder,
- als elektronischer Schalter.

### Bezugszeichenliste

- 1: Elektronikeinsatz (Hauptmodul + Funktionsmodul)
- 2: elektrische Kontaktierungsvorrichtung
- 3: Haltevorrichtungen
- 4: UP-Topf
- 5: Tragring
- 6: Gehäuse
- 7: bodenseitige Öffnung
- 8: Anschlussklemmen für externe Leitungen (z. B. Busleitungen)
- 9: elektrische Kontaktierungsvorrichtung
- 10: Ausnehmungen
- 11: Abdeckrahmen
- 12: -
- 13: Hauptmodul
- 14: Tragring
- 15: Funktionsmodul
- 16: elektrische Kontaktierungsvorrichtung
- 17: -
- 18: UP-Gerätedose
- 19: Wand

## Patentansprüche

1. Elektrisches/elektronisches Unterputz-Installationsgerät der Haus- und Gebäudesystemtechnik oder der Hauskommunikationstechnik, umfassend einen Elektronikeinsatz (1) und einen separaten, zur Montage in eine handelsübliche und/oder standardisierte UP-Gerätedose (18) geeigneten UP-Topf (4), wobei der UP-Topf (4) ein Gehäuse (6) mit Tragring (5) aufweist, wobei im Bodenbereich des Gehäuses (6) Anschlussklemmen (8) zum Anschluss externer Leitungen befestigt sind und wobei im Bodenbereich des Gehäuses (6) eine elektrische Kontaktierungsvorrichtung (9) befestigt ist, welche im montierten Zustand mit einer elektrischen Kontaktierungsvorrichtung (2) des Elektronikeinsatzes (1) zusammenarbeitet, **dadurch gekennzeichnet dass** das Gehäuse (6) zumindest eine bodenseitige Öffnung (7) zum Einführen von externen Leitungen aufweist, wobei die Größe der bodenseitigen Öffnung das Richten von Leitungen mittels eines geeigneten Werkzeugs zulässt.

2. Elektrisches/elektronisches Unterputz-Installationsgerät nach Anspruch 1, **gekennzeichnet durch** einen separaten Abdeckrahmen (11).

3. Elektrisches/elektronisches Unterputz-Installationsgerät nach Anspruch 1, **dadurch gekennzeichnet, dass** Gehäuse (6) und Tragring (5) einteilig ausgebildet sind.

4. Elektrisches/elektronisches Unterputz-Installationsgerät nach Anspruch 1, **dadurch gekennzeichnet, dass** der Elektronikeinsatz (1) Haltevorrichtungen (3) aufweist, welche im montierten Zustand in Ausnehmungen (10) des Tragrings (5) bzw. des UP-Topfes (4) befestigend eingreifen.

5. Elektrisches/elektronisches Unterputz-Installationsgerät nach einem der Ansprüche 1 - 4, **dadurch gekennzeichnet, dass** die Kontaktierungsvorrichtung (2) des Elektronikeinsatzes (1) Stiftleisten umfasst, welche in Buchsen der Anschlussklemmen (8) eingreifen.

6. Elektrisches/elektronisches Unterputz-Installationsgerät nach einem der Ansprüche 1 - 4, **dadurch gekennzeichnet, dass** die Kontaktierungsvorrichtung (2) des Elektronikeinsatzes (1) metallische Druckfedern umfasst, welche unmittelbar die Schraubenköpfe oder zusätzliche Kontakte der Anschlussklemmen (8) oder auch zusätzliche, auf einer Leiterplatte des UP-Topfes (4) ausgebildete Kontakte kontaktieren.

7. Elektrisches/elektronisches Unterputz-Installationsgerät nach einem der Ansprüche 1 - 4, **dadurch gekennzeichnet, dass** die Kontaktierungsvorrichtung (2) des Elektronikeinsatzes (1) Federkontaktstifte umfasst, welche unmittelbar die Schraubenköpfe oder zusätzliche Kontakte der Anschlussklemmen (8) oder auch zusätzliche, auf einer Leiterplatte des UP-Topfes (4) ausgebildete Kontakte kontaktieren.

8. Elektrisches/elektronisches Unterputz-Installationsgerät nach einem der Ansprüche 1 - 4, **dadurch gekennzeichnet, dass** die Kontaktierungsvorrichtungen (2 + 9) des Elektronikeinsatzes (1) und des UP-Topfes (4) als Stift-Buchsenleistenverbindung ausgebildet sind.

9. Elektrisches/elektronisches Unterputz-Installationsgerät nach einem der Ansprüche 1 - 4, **dadurch gekennzeichnet, dass** die Kontaktierungsvorrichtungen (2 + 9) des Elektronikeinsatzes (1) und des UP-Topfes (4) in Direktstecktechnik einer Leiterplatte oder Flex-Leiterplatte ausgebildet sind.

## Claims

1. Electrical/electronic flush-mounted installation device for housing and building systems engineering or for housing communications engineering, comprising an electronics insert (1) and a separate flush-mounted pot (4) which is suitable for being fitted into a commercially available and/or standardized flush-mounted device receptacle (18), wherein the flush-mounted pot (4) has a housing (6) with a supporting ring (5), wherein connection terminals (8) for connecting external lines are fixed in the base region of the housing (6), and wherein an electrical contact-making apparatus (9) is fixed in the base region of the housing (6), the said electrical contact-making apparatus interacting with an electrical contact-making apparatus (2) of the electronics insert (1) in the assembled state, **characterized in that** the housing (6) has at least one opening (7) in the base for inserting external lines, wherein the size of the opening in the base permits lines to be laid by means of a suitable tool.

2. Electrical/electronic flush-mounted installation device according to Claim 1, **characterized by** a separate covering frame (11).

3. Electrical/electronic flush-mounted installation device according to Claim 1, **characterized in that** the housing (6) and the supporting ring (5) are of integral design.

4. Electrical/electronic flush-mounted installation device according to Claim 1, **characterized in that** the electronics insert (1) has holding apparatuses (3) which engage into recesses (10) in the supporting ring (5) or in the flush-mounted pot (4) in a fixing manner in the assembled state.

5. Electrical/electronic flush-mounted installation device according to one of Claims 1-4, **characterized in that** the contact-making apparatus (2) of the electronics insert (1) comprises pin headers which engage into sockets of the connection terminals (8).

6. Electrical/electronic flush-mounted installation device according to one of Claims 1-4, **characterized in that** the contact-making apparatus (2) of the electronics insert (1) comprises metallic compression springs which make direct contact with the screw heads or additional contacts of the connection terminals (8) or else additional contacts which are formed on a printed circuit board of the flush-mounted pot (4).

7. Electrical/electronic flush-mounted installation device according to one of Claims 1-4, **characterized in that** the contact-making apparatus (2) of the electronics insert (1) comprises spring contact pins which make direct contact with the screw heads or additional contacts of the connection terminals (8) or else additional contacts which are formed on a printed circuit board of the flush-mounted pot (4).

8. Electrical/electronic flush-mounted installation device according to one of Claims 1-4, **characterized in that** the contact-making apparatuses (2+9) of the electronics insert (1) and of the flush-mounted pot (4) are in the form of pin/socket header connections.

9. Electrical/electronic flush-mounted installation device according to one of Claims 1-4, **characterized in that** the contact-making apparatuses (2+9) of the electronics insert (1) and of the flush-mounted pot (4) are formed in the direct plug-connection technology of a printed circuit board or flexible printed circuit.

## Revendications

1. Appareil électrique/électronique pour installation encastrée en technique des systèmes domestiques et de bâtiments ou en technique de communication domestique, comprenant une garniture électronique (1) et un boîtier UP (4) séparé convenant pour être monté dans un boîtier d'appareil UP (18) habituel du commerce et/ou standardisé,
le boîtier UP (4) présentant un boîtier (6) doté d'un anneau de support (5),
des bornes de raccordement (8) permettant le raccordement de conducteurs externes étant fixées au niveau du fond du boîtier (6) et un ensemble (9) de contacts électriques étant fixé au niveau du fond du boîtier (6) et coopérant en situation montée avec un ensemble (2) de contacts électriques de la garniture électronique (1),
**caractérisé en ce que**
le boîtier (6) présente au moins une ouverture (7) située du côté de son fond et permettant l'insertion de conducteurs externes, la taille de l'ouverture du fond permettant d'orienter les conducteurs au moyen d'un outil approprié.

2. Appareil électrique/électronique pour installation encastrée selon la revendication 1, **caractérisé par** un bâti séparé d'un recouvrement (11).

3. Appareil électrique/électronique pour installation encastrée selon la revendication 1, **caractérisé en ce que** le boîtier (6) et l'anneau de support (5) sont formés d'un seul tenant.

4. Appareil électrique/électronique pour installation encastrée selon la revendication 1, **caractérisé en ce que** la garniture électronique (1) présente des dispositifs de maintien (3) qui, en situation montée, s'engagent dans des découpes (10) ménagées dans l'anneau de support (5) ou le boîtier UP (4) pour la fixation.

5. Appareil électrique/électronique pour installation encastrée selon l'une des revendications 1 à 4, **caractérisé en ce que** l'ensemble (2) de mise en contact de la garniture électronique (1) présente des réglettes de tiges qui s'engagent dans des douilles des bornes de raccordement (8).

6. Appareil électrique/électronique pour installation encastrée selon l'une des revendications 1 à 4, **caractérisé en ce que** l'ensemble (2) de mise en contact de la garniture électronique (1) comporte des ressorts métalliques de poussée qui entrent en contact direct avec les têtes de vis ou des contacts supplémentaires des bornes de raccordement (8) ou également avec des contacts supplémentaires formés sur une carte de circuit du boîtier UP (4).

7. Appareil électrique/électronique pour installation encastrée selon l'une des revendications 1 à 4, **caractérisé en ce que** l'ensemble (2) de mise en contact de la garniture électronique (1) comporte des tiges élastiques de contact qui entrent en contact direct avec les têtes de vis ou des contacts supplémentaires des bornes de raccordement (8) ou également avec des contacts supplémentaires formés sur une carte de circuit du boîtier UP (4).

8. Appareil électrique/électronique pour installation encastrée selon l'une des revendications 1 à 4, **caractérisé en ce que** les ensembles (2 + 9) de mise en contact de la garniture électronique (1) et du boîtier UP (4) sont configurés comme liaisons à réglettes de tiges et douilles.

9. Appareil électrique/électronique pour installation encastrée selon l'une des revendications 1 à 4, **caractérisé en ce que** les ensembles (2 + 9) de mise en contact de la garniture électronique (1) et du boîtier UP (4) sont configurés dans une technique d'enfichage direct sur une carte de circuit ou sur une carte de conducteur flexible.
